# EUROPEAN PATENT APPLICATION

(11) **EP 2 495 624 A2**
(43) Date of publication of application: **05.09.2012**
(21) Application number: 12158088.0
(22) Date of filing: 05.03.2012
(51) Int. Cl.: G05B 19/042

(54) **System and method for porting of device software**

(30) Priority: 04.03.2011 US 201113040917
(71) Applicant: General Electric Company, Schenectady, NY 12345 (US)
(72) Inventor: Nekkar, Raghavendra Rao Perampalli, 500081 Hyderabad (IN); Thakur, Pavan Kumar Singh, 500081 Hyderabad (IN); Chandrakanth, Alahari Venkata, 500081 Hyderabad (IN); Sangam, Srinivas Rao, 560066 Bangalore (IN)
(74) Representative: Picker, Madeline Margaret

(57) **Abstract**

Systems and methods are provided for porting software. In one embodiment, a container generator (40) is provided. The container generator (40) is configured to translate a field device description file into a plug-in file (102) having executable instructions and a parameter configuration file (104) having configuration information. The plug-in file (102) and the parameter configuration file (104) are further configured for use by a destination application to communicate with a device (22, 24, 26).

## Description

### BACKGROUND OF THE INVENTION

The subject matter disclosed herein relates to the porting of software, and more particularly, to the porting of device software.

Certain devices such as sensors, pumps, valves, and the like, may be controlled by a controller using electrical signals. For example, the controller may use a communications bus to send and received signals to the various devices. However, each device manufacturer may use a different set of signals to communicate with the controller. Accordingly, the controller must be constantly updated as new devices are added and older devices are upgraded.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a system includes a container generator. The container generator is configured to translate a field device description file into a plug-in file having executable instructions and a parameter configuration file having configuration information. The plug-in file and the parameter configuration file are further configured for use by a destination application to communicate with a device.

In a second embodiment, a non-transitory machine readable media is provided. The machine readable includes instructions configured to translate a field device description language file to produce a translated field device description language file. The machine readable also includes instructions configured to generate a plug-in file and a parameter configuration file based on the translated field device description language file. The plug-in file and the parameter configuration file are configured for use by a destination application to display a graphical control that communicates with a device.

In a third embodiment, a method for porting software is provided. The method includes reading a field device description file. The method further includes translating the field device description file into an executable file having .instructions configured to display a graphical control on a destination application. The graphical control is configured for use by the destination application to communicate with a field device.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a schematic diagram of an embodiment of an industrial control system,
including a communications bus;
FIG. 2 is a schematic diagram of embodiments of a container generator;
FIG. 3 is a diagram of embodiments of an electronic device description (EDD) file; and
FIG. 4 is a flow chart of an embodiment of a logic suitable for porting device software.

### DETAILED DESCRIPTION OF EMBODIMENTS OF THE INVENTION

One or more specific embodiments of the invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the invention, the articles "a," "an," "the," and "said" are intended to mean that there are one or more of the elements. The terms "comprising," "including," and "having" are intended to be inclusive and mean that there may be additional elements other than the listed elements.

The disclosed embodiments include a system and a method suitable for porting or translating a file, such as an electronic device description (EDD) file, for use in industrial automation systems such as a human machine interface (HMI) system, a manufacturing execution system (MES), a distributed control system (DCS), or a supervisor control and data acquisition (SCADA) system. Field devices such as sensors, valves, actuators, and the like, include device-specific parameters and functions used in interfacing with the device. For example, a temperature sensor may include parameters such as a sensed temperature range, calibration parameters, and calibration functions related to calibrating temperature data. Industrial automation systems may interface with the field devices by using device driver software files that contain low-level functions calls useful in communicating with the field devices. The device driver software is programmed to operate as an interface between a specific device (e.g., temperature sensor) and a specific industrial automation system (e.g., HMI). For example, a manufacturer for the temperature sensor would include device drivers when delivering a temperature sensor, suitable for communication between a computer running a version of the Windows™ operating system and the temperature sensor. However, the device drivers are typically not independent from the operating system, and lack features, such as graphical display features, useful in describing how the device data should be presented.

Some technologies, such an EDD language defined in the International Electrotechnical Commission (IEC) 61804 standard, enable the manufacturer of the device to create a single EDD file that encapsulates all of the parameters and functions associated with that particular device. Such an EDD file may then replace the device driver software. That is, the EDD file is capable of replacing the device driver file in operating as a software interface between the device (e.g., temperature sensor) and an industrial system (e.g., HMI). Additionally, the EDD file is suitable for operating across a number of operating systems, and includes graphical elements for describing the presentation of data and properties for the device. For example, the EDD file may include support for the presentation and placement of graphical elements such as graphs, charts, grids, and images. Indeed, the EDD file may include support for any number of device parameters, such as process variables, setpoint parameters, configuration parameters, high and low limits, and so forth. Accordingly, the manufacturer is able to provide a single, cross-platform EDD file that also includes a preferred presentation of certain graphical information related to the device (e.g., configuration, diagnostic, and calibration parameters).

A developer, such as an HMI screen developer (e.g., commissioning engineer or programmer), may visually inspect the EDD file or use an EDD file viewer to manually translate the EDD file for use in an HMI screen. For example, the commissioning engineer may follow the same visual layout found in an EDD menu data structure to create a similar visual layout in the HMI screen. EDD menus may operate as visual containers for other visual components, such as graphical controls, tabbed pages, text boxes, static text, and the like. However, this recreation of the original visual layout is time consuming and error prone. In certain embodiments described herein, the EDD file may be translated or ported by using a container generator so as to fully operate in an industrial automation system. That is, all of the operations of the original EDD file, including the presentation and use of the original visual layout designed by the manufacturer of the device, may be ported over so that they may be used in the industrial automation system.

In one embodiment, the container generator may parse the EDD file and translate the file into a plug-in file and parameter configuration file. The plug-in file may include computer instructions specific to a given operating system and/or industrial automation system. The parameter configuration file may include configuration parameters and/or instructions suitable for reconfiguring parameters associated with the plug-in file, and may be written in an operating system (OS) generic format suitable for use in a variety of operating systems. The plug-in file computer instructions may be containerized or encapsulated using various techniques described herein, so as more easily interoperate with one or more industrial automation systems. That is, the plug-in file may be used by the industrial automation system without the need to recompile or otherwise modify the computer code of the industrial automation system. Indeed, in certain embodiments, the plug-in file may be disposed in a file folder that is used by the industrial automation system to load external computer code (e.g., dynamic link libraries) during startup. As the industrial automation system loads or starts, the file folder is scanned and the plug-in file may then be loaded and used to provide all of the operations found in the original EDD file. The parameter configuration file, such as an extensible markup language (XML) file, a text file, or a binary file, may include parameter information suitable to configure, diagnose, and/or calibrate one or more parameters of the EDD's device. By translating the EDD file, the container generator enables the re-use of the EDD file information in any number of industrial automation systems while maintaining the manufacturer's preferred graphical and/or operational settings. Indeed, the porting of the EDD may substantially reduce or eliminate the work necessary in creating software suitable to support the device across multiple industrial automation systems.

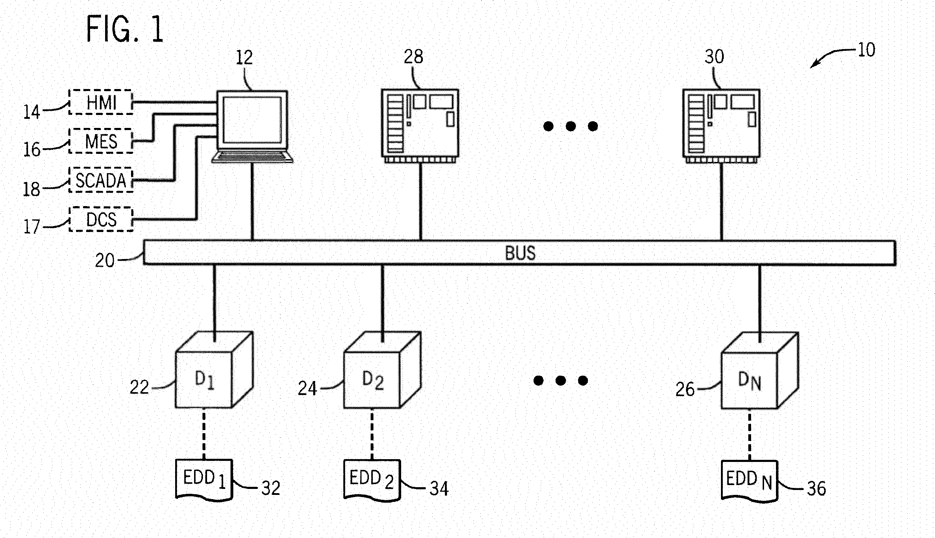

Turning to FIG. 1, an embodiment of an industrial process control system 10 is depicted. A computer 12 is suitable for executing a variety of field device configuration and monitoring applications, and provides an operator interface through which an engineer or technician may monitor the components of the industrial process control system 10. The computer 12 may be any type of computing device suitable for running software applications, such as a laptop, a workstation, a tablet computer, or a handheld portable device (e.g., personal digital assistant or cell phone). Indeed, the computer 12 may include any of a variety of hardware and/or operating system platforms. In one example, the computer 12 may be a personal computer executing an operating system such as a version of the Windows™ operating system. However, alternative embodiments of the invention can potentially run on any one or more of a variety of operating systems, such as Unix™, Linux™, Solaris™, Mac OS™, and so forth.

In accordance with one embodiment, the computer 12 may host an industrial automation system such as an HMI system 14, a MES 16, a DCS system 17, and/or a SCADA system 18. Further, the computer 12 is communicatively connected to a bus 20 suitable for enabling communication between the computer 12 and devices D₁ 22, D₂ 24, and D₃ 26. The devices 22, 24, and 26 may include field devices such as sensors, valves, actuators, and the like, suitable for use in industrial applications. It is also to be noted that the devices 22, 24, and 26 may include devices suitable for use in residential applications, such as home automation applications. The devices 22, 24, and 26 may include industrial devices, such as Fieldbus Foundation™ devices that include support for the Foundation H1 bi-directional communications protocol. The devices 22, 24, and 26 may also include support for other communication protocols, such as those included in the HART® Communications Foundation (HCF) protocol, and the Profibus Nutzer Organization e.V. (PNO) protocol.

In the depicted embodiment, two programmable logic controllers (PLCs) 28 and 30 are also connected to the bus 20. The PLCs 28 and 30 may use the bus 20 for communicating with and controlling any one of the devices 22, 24, and 26. The bus 20 may be any electronic and/or wireless bus suitable for enabling communications, and may include fiber media, twisted pair cable media, wireless communications hardware, Ethernet cable media (e.g., Cat-5, Cat-7), and the like. Further, the bus 20 may include several sub-buses, such as a high speed Ethernet sub-bus suitable for connecting system 10 components at communication speeds of 100 MB/sec and upwards. The bus 20 may also include an H1 network sub-bus suitable for connecting system 10 components at communications speeds of approximately 31.25 Kb/sec. The sub-buses may intercommunicate with each other, for example, by using linking devices or gateways, such as those gateways available under the designation FG-100 provided by softing AG, of Haar, Germany. Indeed, a number of interconnected sub-buses of the bus 20 may be used to communicate amongst the components of the system 10.

It is to be noted that the industrial process control system 10 depicted in FIG. 1 is greatly simplified for purposes of illustration. The number of components is generally many times greater than the number of depicted components. This is especially the case with regard to the number of depicted devices 22, 24, and 26. Indeed, in an industrial environment, the number of devices may number in the hundreds for the industrial process control system 10.

Each one of the devices 22, 24, and 26 includes a respective EDD file written using a declarative EDD language syntax (e.g., IEC 61804 syntax), such as the depicted EDD files EDD₁ 32, EDD₂ 34, and EDD_{N} 36. Each EDD file associated with a particular device describes the device and all of the device's parameters in detail. Additionally, the EDD file may include scripted methods written in a subset of the C language. However, other languages may be used, including BASIC, FORTRAN, Java, C#, and so forth. Such methods may be used to support an interactive setup of the device, provide calibration procedures, and the like. The device manufacturer may create the EDD file and include other useful information, such as display presentation and layout information. The display information may include graphs, charts, grids, and images, buttons, input boxes, static text, and the like. Indeed, a complete user interface for the device may be defined in the EDD file. For example, a graphical image of a pump may be depicted, and a pump icon may be highlighted if the pump's temperature exceeds a certain setpoint.

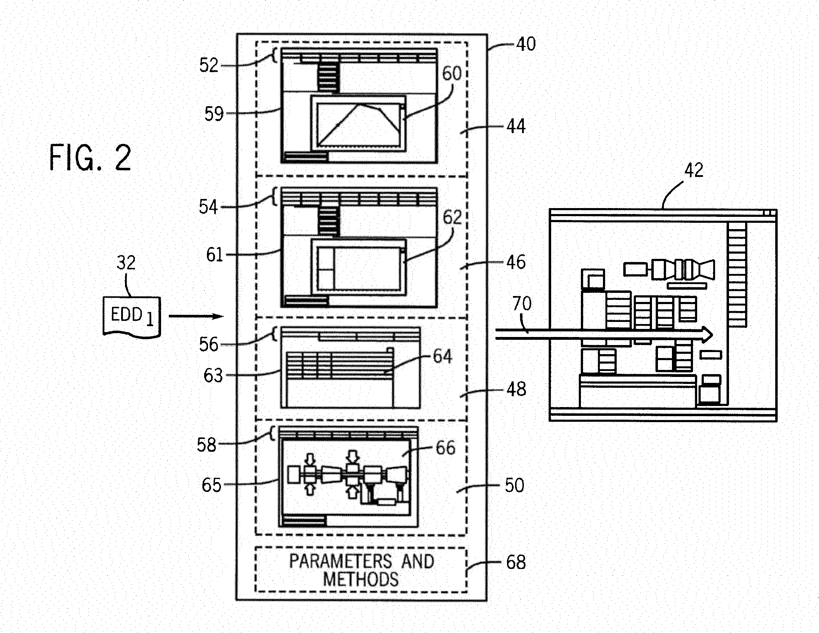

The embodiments disclosed herein can translate the EDD files (e.g., files 32, 34, and 36) for use by automation systems such as the HMI 14, MES 16, DCS 17, and/or SCADA 18. Indeed, the EDD files may be translated or ported so as to be supported in any number of automation systems, as described in more detail below with respect to FIGS. 2-4. By translating the EDD files, the time required to create new screens and controls for each device 22, 24, and 26 may be substantially reduced or eliminated. For example, an HMI developer or commissioning engineer may use the disclosed embodiments to "drag and drop" elements of the EDD files, such as visual elements, into an HMI 14 screen under development. The HMI 14 may then have access to all of the visual elements found in the original EDD file (e.g., files 32, 34, and 36), as well as to all of the parameter and script method information suitable for communicating and/or controlling the device (e.g., device 22, 24, and 26). Indeed, the HMI 14 may use the translation files created by a container generator to communicate with and/or control the device, as well as visually display any number of device information.

FIG. 2 is a schematic diagram illustratively depicting an embodiment of a container generator 40 that may translate an EDD file (e.g., EDD₁ file 32) into, for example, a HMI screen 42. The container generator 40 may include non-transitory machine readable media storing code or computer instructions that may be used by a computing device (e.g., computer 12) to implement the techniques disclosed herein. In one embodiment, the container generator 40 may read or parse the EDD file 32 and present a visual depiction of certain graphical elements in the EDD file 32, such as the graphical menus 44, 46, 48, and 50. In certain embodiments, the graphical menus 44, 46, 48, and 50 correspond to visual menus of an enhanced EDD language, such as the menus found in the IEC 61804-3 standard or newer versions of the IEC 61804 standard.

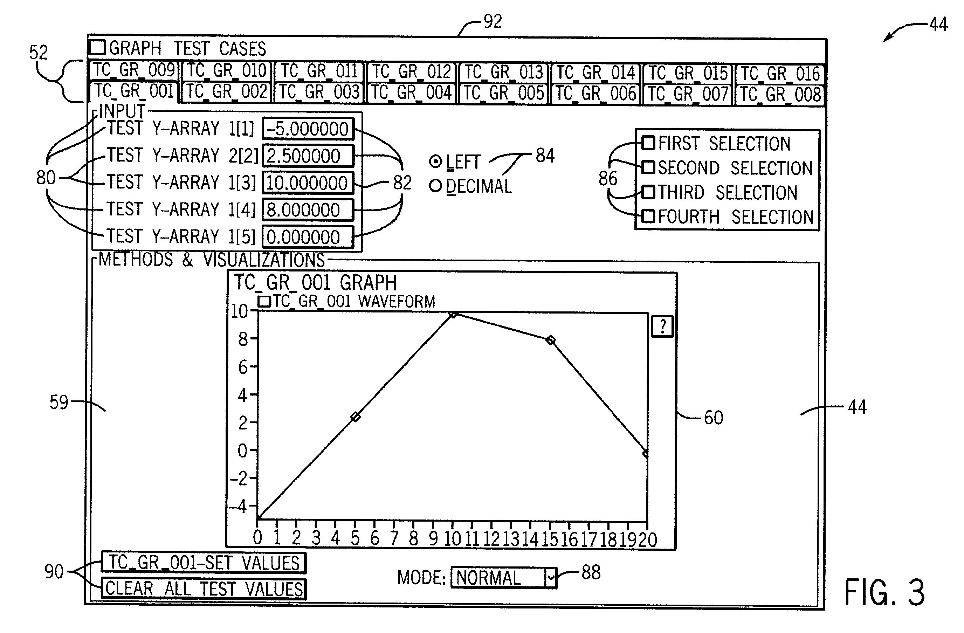

The graphical menus 44, 46, 48, and 50 may be tabbed page menus. That is, each menu may include one or more tabs, such as tabs 52, 54, 56, and 58. Each tab may correspond to a page, such as pages 59, 61, 63, and 65. Each tabbed page 59, 61, 63, and 65 may include one or more graphical elements, such as a graph control 60, a chart control 62, a grid control 64, and an image control 66. In additional to the aforementioned visual elements, parameters and methods information 68 may also be read from the EDD file 32. In certain examples, the parameters and methods information 68 may include only parameters and no scripted methods. Each tabbed page 59, 61, 63, and 65 may include additional visual and textual controls, such as buttons, input text boxes, static text, radio buttons, check boxes, and so forth, as described in more detail below with respect to FIG. 3. Indeed, each of the tabbed pages 59, 61, 63, and 65 may include all controls available in a visual container such as a window, a dialog box, a message box, and the like.

The combination of menus 44, 46, 48, and 50 with the parameters and methods information 68 enables a detailed description of the device 22. For example, if the device D₁ 22 is a valve, the graph control 60 of the menu 44 may detail valve pressures as a measure of time, the chart control 62 of the menu 46 may chart a current flow volume, the grid control 64 of the menu 48 may display a table of previous flow volumes, and the image control 66 of the menu 50 may display components or parts of the valve. Additionally, the parameters and methods 68 may include valve parameters such as valve position indicators (e.g., fully open, fully closed), flow pressure, valve temperature, flow volume, flow velocity, and so forth. Certain of these parameters may be used to update the device, for example, the valve may be actuated to a new position by communicating a valve position parameter value (e.g., full closed) to the valve. Indeed, a variety of devices, such as flow meters, pH sensors, electric actuators, temperature sensors, vibration sensors, clearance sensors (e.g., measuring distances between a rotating component and a stationary component), pressure sensors, switches (e.g., Hall switches, solenoid switches, relay switches), industrial controllers, and so on, may be described by using the combination of menus 44, 46, 48, and 50 with the parameters and methods information 68.

It would be beneficial to translate the EDD₁ file 32 into one or more formats suitable for use by the HMI screen 42. The translation would improve component reuse as well as save a substantial amount of time when developing the HMI screen. There would be no need to create new visual or non-visual elements related to device D₁ 22, but rather, all visual and non-visual elements could be reused from the EDD₁ file 32. Additionally, the display presentations designed by the device D₁ 22 manufacturer may be preserved by translating the EDD₁ file 32 for use by the HMI screen 42. For example, the manufacturer may have included certain displays, such as the graph control 60, the chart control 62, the grid control 64, and the image control 66 optimized to display various measurements and other parameters for the device D₁ 22.

Accordingly, the container generator 40 may provide for an embodiment where a "drag and drop" operation 70 may be used to position one or more elements of the EDD₁ file 32, into the HMI screen 42. Any visual and non-visual element of the EDD₁ file 32 may be translated into the HMI screen 42 through the "drag and drop" operation 70. For example, the menu 44, including all the tabs 52 (and tabbed page 59), may be selected and then dragged and dropped into the HMI screen 42. In another example, individual elements may also be dragged and dropped. In this example, the HMI developer may select only the graph control 60 for use by the HMI screen 42. Additionally, a combination of elements may be dragged and dropped, such as both the chart control 62 and the image control 66. All parameters and methods information 68 associated with the dragged and dropped element may also be automatically translated and carried over into the HMI screen 42. Indeed, the "drag and drop" operation 70 enables a quick mechanism for developing the HMI screen 42 by reusing some or all components of the EDD file 32, including the EDD menus 44, 46, 48, 50, and the parameters and methods information 68. By using operations such as the "drag and drop" operation 70, a more efficient and less error-prone mechanism for creating new screens, such as HMI screen 42 is provided.

FIG. 3 depicts an embodiment of the EDD menu 44, including tabs 52, tabbed page 59 labeled "TC_GR_001" including static text 80, input boxes 82, radio buttons 84, checkboxes 86, drop down box 88, the graph control 60 and buttons 90. As mentioned above, the EDD menu 44, including all controls 60, 80, 82, 84, 86, 88, and 90, may be dragged and dropped so as to substantially reduce the development time for an industrial automation system such as an HMI 14, MES 16, DCS 17, and/or SCADA 18. Indeed, all controls 52, 59, 60, 80, 82, 84, 86, 88, and 90 may be dragged and dropped, individually, or in combination, using the "drag and drop" operation 70. For example, an HMI developer may desire to reuse the entire menu 44. In one embodiment, the HMI developer may use a mouse cursor to select menu 44, for example, by dragging and dropping a title bar 92 of the menu 44 and move the menu 44 into the HMI screen 42 (shown in FIG. 2), thus reusing all controls 52, 59, 60, 80, 82, 84, 86, 88, and 90 found in the menu 44. In another embodiment, the HMI developer may drag and drop individual controls 52, 59, 60, 80, 82, 84, 86, 88, and 90, or a combination of the controls 52, 59, 60, 80, 82, 84, 86, 88, and 90, for use in the HMI screen 42. Any suitable mechanism for drag and drop may be used, including mouse actions, keyboard actions, voice commands, and the like. It is also to be noted that other mechanism such as copying/pasting may be used by the HMI developer to select and transfer one or more of the controls 52, 59, 60, 80, 82, 84, 86, 88, and 90. Additionally, the reuse of the EDD files 32, 34, and 36 (shown in FIG. 1) may be further automated, for example, as a batch processing job. In batch processing, the EDD files 32, 34, and 36 may be used as input to the container generator 40 and the container generator 40 may then produce one or more new HMI screens based on the EDD files 32, 34, 36. That is, for each one of the EDD files 32, 34, and 36, the container generator 40 may create a corresponding HMI screen (or MES, DCS and SCADA screen) having all of the controls and operations found in the respective EDD file 32, 34, or 36. Such a conversion would not use the "drag and drop" operation 70 but rather it would use an import/export operation suitable for porting an entire EDD file. By providing for a simple mechanism for component reuse, such as the "drag and drop" operation 70 and the import/export operation, increased developer productivity and reduced time for the creation of HMI screens 42 are improved.

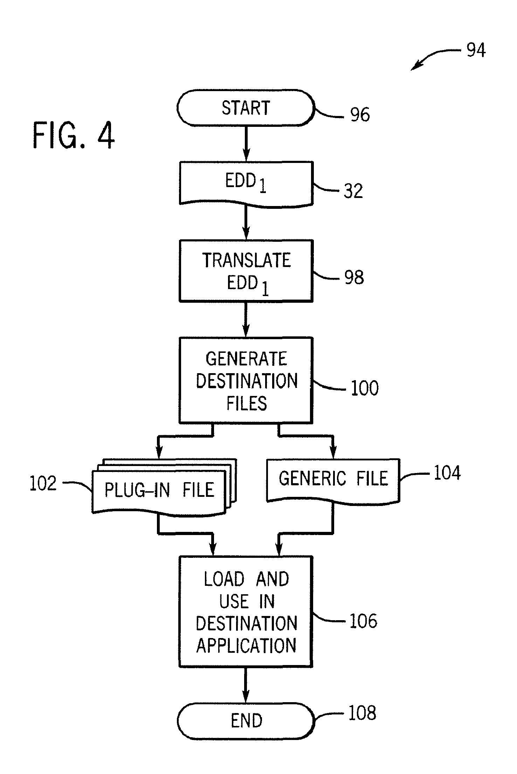

FIG. 4 depicts an embodiment of a logic 94 that may be used to translate an EDD file, such as the EDD file 32, into a format suitable for use in an automation system, such as the HMI 14, MES 16, DCS 17 and/or SCADA 18. The logic 94 may first begin (block 96) by translating the EDD file (e.g., file 32) (block 98). The EDD file 32 may include text, binary data, and the like, including combinations of text and binary data. The EDD file may also be a "tokenized" EDD file in which text in the EDD file has been converted to a compressed binary format for ease of storage and transmission and to prevent tampering. Accordingly, the data in the EDD file 32 is translated so as to identify elements in the EDD file 32, such as visual elements (e.g., menus 44, 46, 48, and 50 shown in FIG. 2), and parameters and methods information 68. An application programming interface (API) such as a device description (DD) services API may be used to aid in the translation of the EDD file 32. For example, the DD services may provide an interpreter suitable for interpreting or translating the information in the EDD file 32 into component elements (e.g., visual elements). In another embodiment, a parser suitable for syntactically analyzing the EDD file 32 and producing a set of tokens may be used. Indeed, any mechanism suitable for analyzing the EDD file 32 so as to extract all the information in the file 32 including parameters and methods information 68 and visual presentation information.

The logic 94 may then generate one or more destination files (block 100) suitable for use by a destination application such as an industrial automation system application. In one embodiment, a plug-in file 102 and a parameter configuration file 104 are generated. The plug-in file 102 may be used as a container for all execution-specific information. That is, functions calls, subroutines, procedures, and the like, useful in executing computer instructions may be stored in the plug-in file 102. Accordingly, each industrial automation system application that is supported by the container generator 40, such as the Cimplicity™ application available from General Electric Co., of Schenectady, New York, may more easily use the plug-in file 102 to execute computer instructions useful in communicating or otherwise interacting with the devices 22, 24, and 26.

In one embodiment, the plug-in file 102 may be a dynamic link library (DLL) file encapsulating or containing executable computer instructions. The DLL format enables a runtime usage of the information in the file in certain operating systems, such as the various versions of the Windows™ OS, without the need to recompile or otherwise modify the code of the application using the DLL. More specifically, the DLL formatted plug-in file may be loaded by an application when the application is started by a user and may not required additional modifications to the application, such as recompilation of the application, in order to access the plug-in file's computer executable code and other data. For example, an application such as Cimplicity™ may read certain plug-in file directories and load the DLLs found in these directories during startup. Once the DLLs are loaded, the application has complete access to all of the information, including computer instructions, encapsulated in the DLL.

It is to be understood that other forms of plug-in files may be used. For example, a Java bean file may be used that is suitable for use in any number of applications supporting the Java language. In another example, an ActiveX control may be used for encapsulation of the plug-in file's information. In this example, the ActiveX control may be developed in any language that supports Microsoft's Component Object Model (COM) (e.g., C#, Visual Basic, and C++). Further, the ActiveX control may be delivered through a remote website. Likewise, other COM-based containers may be used, including an Object-linking and Embedding (OLE) control, and an OLE control extension (OCX). Further, .NET Framework objects (including .NET DLLs) may also be used as container objects suitable for encapsulating the plug-in file's information. Accordingly, a .NET class may be developed in any number of languages and used to encapsulate the plug-in file's information. All of these aforementioned instruction encapsulation technologies enable the creation of a plug-in file 102 that may encapsulate a variety of data, including executable computer instructions.

The parameter configuration file 104 may store non-executable data such as device parameter information suitable for identifying and using all of the parameters included in a given device (e.g., device 22, 24, and 26 shown in FIG. 1). For example, for a device such as a valve, parameters may include valve position indicators (e.g., fully open, fully closed), flow pressure, valve temperature, flow volume, flow velocity, and so forth. The parameter configuration file 104 may include a file format readable by a variety of applications and OS platforms. For example, an extensible markup language (XML) format may be used as the file format for the parameter configuration file 104. The use of XML as the file format for the parameter configuration file 104 enables the exporting and importing of data through a wide variety of applications and OS platforms. Indeed, XML may be used as an open standard for importing and exporting information across different OS platforms and systems. In another example, a textual file format may also be used. For example, a textual encoding such as ASCII encoding, Unicode encoding, and the like, may be used to store textual data in the parameter configuration file 104. In yet another example, a binary format may be used. In this binary example, headers or blocks of metadata may be used to inform about the structure of the binary data and to aid in the interpretation of the binary data.

By separating the executable data (e.g., computer instructions) from the non-executable data (e.g., parameter information), an improved reuse of information may be enabled. A single parameter configuration file 104 may be distributed among one or more destination applications. Further, reconfiguration of parameter information may be easily performed by changing one or more values stored in the parameter configuration file 104 without the need to change the plug-in file 102. The logic 94 may then load and use the plug-in file 102 and the generic file 104 in the destination application, such as an HMI 14, MES 16, DCS 17, and/or SCADA 18 (block 106). In one embodiment, the plug-in file 102 and the parameter configuration file 104 may be disposed in a specific plug-in directory that is used during application startup operations. In this embodiment, the destination application will read the files 102 and 104 from the plug-in directory and load the files into a memory such as random access memory (RAM). In another embodiment, a destination application user may import the plug-in file 102 and the parameter configuration file 104 through a user operation such as a "Files Import" operation. The files may then be available for use by the destination application. Once the files are loaded into the destination application, the destination application may now communicate with the devices (e.g., devices 22, 24, and 26) to receive device data and/or to set device parameters such as actuation positions, sensor setpoints, configuration parameters, and so forth. Further, the destination application may now include one or more screens showing one or more of the visual elements found in the EDD files 32, 34, or 36. Indeed, the full functionality of provided by the EDD files 32, 34, or 36, including visual presentation, and device communication functionality, may now be present in the destination application.

Technical advantages of the invention include the ability to easily transfer device configuration and communication files into any number of industrial automation systems. A manufacturer of a field device may design a set of visual controls for the field device, and this set of visual controls may be efficiently re-used in the industrial automation systems. System development operations, such as a "drag and drop" operation, are provided which enable a fast and efficient development of system screens in HMI, MES, and/or SCADA applications. Substantially reduced development time may result when creating new screens based on dragging and dropping existing controls from device files, such as EDD files. A plug-in file may be provided, including computer executable instructions suitable for use by an industrial automation system. A parameter configuration file may also be provided that enables a simple modification of device parameters through an OS-agnostic file format such as XML.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

**1.** A system comprising:
a container generator (40) configured to translate a field device description file into a plug-in file (102) having executable instructions and a parameter configuration file (104) having configuration information, wherein the plug-in file (102) and the parameter configuration file (104) are configured for use by a destination application to communicate with a device (22, 24, 26).

**2.** The system of claim 1, wherein the field device description file comprises an electronic device description (EDD) file (32, 34, 36) derived by using International Electrotechnical Commission (IEC) 61804 syntax.

**3.** The system of claim 1 or claim 2, wherein the plug-in file (102) comprises a dynamic link library (DLL), a shared library, an ActiveX control, an Object-linking and Embedding (OLE) control, an OLE control extension (OCX), a .NET Framework object, or a combination thereof.

**4.** The system of claim 1, 2 or 3, comprising a controller (12, 28, 30) configured to use a communications protocol based on the field device description language to communicate with the device (22, 24, 26).

**5.** The system of any one of the preceding claims, wherein the plug-in file (102) is configured to communicate with the device (22, 24, 26) through a Foundation Fieldbus protocol, a HART Communications Foundation (HCF) protocol, a Profibus protocol, or a combination thereof.

**6.** The system of any one of the preceding clams, wherein the plug-in file (102) comprises a graphical control configured to visually present information on a screen of the destination application.

**7.** The system of claim 6, wherein the graphical control comprises a graph control (60), chart control (62), a grid control (64), an image control (66) , a tab, a tabbed page (59, 61, 63, 65), a button (90), a check box (86), an input text box (82), a static text (80), or a combination thereof.

**8.** The system of claim 7, comprising a graphical menu (44, 46, 48, 50), wherein the graph control (60), the chart control (62), the grid control (64), the image control (66), or a combination thereof, are visually organized in the graphical menu (44, 46, 48, 50).

**9.** The system of any one of the preceding claims, wherein the destination application comprises a human machine interface (HMI) (14), a manufacturing execution system (MES) (16), a distributed control system (DCS) (17), a supervisor control and data acquisition (SCADA) (18), or a combination thereof.

**10.** The system of any one of the preceding claims, wherein the destination application uses a first communications protocol and wherein the plug-in file (102) uses a second communications protocol, and wherein the first communications protocol is different from the second communications protocol.

**11.** The system of any one of the preceding claims, wherein the parameter configuration file (104) comprises an extensible markup language (XML) file, a text file, a binary file, or a combination thereof.

**12.** A non-transitory machine readable media, comprising:
instructions configured to translate a field device description language file to produce a translated field device description language file;
instructions configured to generate a plug-in file and a parameter configuration file based on the translated field device description language file, wherein the plug-in file and the parameter configuration file are configured for use by a destination application to display a graphical control that communicates with a device.

**13.** The non-transitory machine readable media of claim 12, wherein the graphical control is configured to update at least one device parameter of the device.

**13.** The non-transitory machine readable media of claim 12, wherein the parameter configuration file comprises an extensible markup language (XML) file, a text file, a binary file, or a combination thereof.

**14.** The non-transitory machine readable media of claim 12 or claim 13, wherein the destination application uses a first communications protocol and wherein the graphical control uses a second communications protocol, and wherein the first communications protocol is different from the second communications protocol.

**15.** A method for porting software comprising:
reading a field device description file;
translating the field device description file into an executable file having instructions configured to display a graphical control on a destination application, wherein the graphical control is configured for use by the destination application to communicate with a field device.
